(19) **Europäisches Patentamt**
**European Patent Office**
**Office européen des brevets**

(11) **EP 4 685 347 A1**

(12) **EUROPEAN PATENT APPLICATION**

(43) Date of publication:
**28.01.2026 Bulletin 2026/05**

(21) Application number: 24382823.3

(22) Date of filing: **26.07.2024**

(51) International Patent Classification (IPC):
**F03D 7/02** *(2006.01)* **F03D 7/04** *(2006.01)*

(52) Cooperative Patent Classification (CPC):
**F03D 7/0204; F03D 7/046;** F05B 2270/329

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Nordex Energy SE & Co. KG**
**22419 Hamburg (DE)**
• **Nordex Energy Spain S.A.U.**
**31395 Barásoain (Navarra) (ES)**

(72) Inventors:
• **GELLERMANN, Jan**
**Hamburg (DE)**
• **GIL, Pablo**
**Barásoain (ES)**
• **MANITZ, Jan-Erik**
**Hamburg (DE)**

(74) Representative: **Völkl Siebenson Patentanwälte - Partnerschaft mbB**
**Baaderstraße 13**
**80469 München (DE)**

(54) **METHOD FOR OPERATING A WIND TURBINE AND WIND TURBINE**

(57)    According to an embodiment, the method is for operating a wind turbine having (100) a rotatable component (1 to 4) and at least one drive (di) for rotating the rotatable component by exerting torque. The method comprises a step of providing first information (I1) which is representative of an operational variable (OV) of the wind turbine. The method further comprises a step of determining second information (12) depending on the first information, wherein the second information is representative of a variable gain factor (K), the value of which depends on the operational variable. Furthermore, an operating setpoint (OS_i) for the at least one drive is determined depending on the second information. The operating setpoint is determined with the help of a controller (P1 to P4) which uses the variable gain factor.

**Fig. 7**

EP 4 685 347 A1

**Description**

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation, even at extreme conditions, like at high wind speeds or in failure situations.

One object to be achieved is to provide a method which contributes to a safe and efficient operation of the wind turbine, particularly during extreme conditions. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable component and at least one drive for rotating the rotatable component by exerting torque. The method comprises a step of providing first information which is representative of an operational variable of the wind turbine. The method further comprises a step of determining second information depending on the first information, wherein the second information is representative of a variable gain factor, the value of which depends on the operational variable. Furthermore, an operating setpoint for the at least one drive is determined depending on the second information. The operating setpoint is determined with the help of a controller which uses the variable gain factor.

By making the gain factor of a controller used for operating the wind turbine dependent on one or more operational variables associated with the operation of the wind turbine, it can be efficiently reacted on changing conditions. For example, at extreme conditions, such as extreme load conditions, the gain factor can be increased for making the controlling of the controller stiffer.

The method specified herein is, in particular, a computerimplemented method, i.e. is performed with the help of a computer or a processor.

A setpoint herein defines a certain target to be achieved when operating the wind turbine. The operating setpoint defines the target operation of a drive. An operating setpoint for a drive is, in particular, equivalent to control/operation information for the drive.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data or electrical signals.

The drive may comprise an electric motor. Moreover, the drive may comprise a gearbox and a pinion. The electric motor applies an input rotational speed and an input torque to the gearbox, which is thereby transformed to an output rotational speed and an output torque and is applied to the pinion. By way of example, the transmission ratio between the input rotational speed and the output rotational speed of the gearbox of the drive is at least 100 or at least 1000. That is, the electric motor, on one side of the gearbox, rotates at least 100 or at least 1000 times faster than the pinion on the other side of the gearbox.

The drive may be attached to the rotatable component so that it rotates together with the rotatable component. For example, the drive then meshes with and exerts torque to a non-rotatable element which in turn may cause the rotation of the rotatable component. Alternatively, the drive is rotationally fixed and does not rotate together with the rotational component. The drive may then mesh with the rotatable component and may exert torque to it, which can cause its rotation.

The first information is representative of an operational variable of the wind turbine. The operational variable may be a physical quantity, like force, torque, wind speed, wind turbulences, rotational speed of the at least one drive and so on. The operational variable could also define or be representative of an operating condition or operating situation or operating mode of the wind turbine. For example, the operational variable could be representative of an extreme situation or an emergency situation or a failure situation. For example, the operational variable could be a code defining the operating mode of the wind turbine, e.g. it could be a failure code. The first information may be determined depending on measurements.

The second information is representative of a variable gain factor of a controller. Particularly, a control variable of the controller depends on the variable gain factor and an error value, wherein the error value is the difference between a setpoint and the corresponding process variable. For example, the control variable depends linearly on the variable gain factor, particularly increases linearly with increasing gain factor. The gain factor is, in particular, a positive number. The variable gain factor may be varied continuously or step wise. For example, the variable gain factor can take at least two different values.

The second information is determined depending on the first information, namely such that the value of the variable gain factor depends on the operational variable. For example, in the case that the operational variable is a physical quantity, like an external torque acting on the rotatable component, the gain factor may change continuously with a changing operational variable. Alternatively, different ranges of the operational variable could be assigned different values of the variable gain factor. In the case that the operational variable is representative of an operating situation, e.g. if it is a code, different codes could be assigned different gain factors. The gain factor matching a certain code could be extracted from a look-up table, for example.

The operating setpoint is determined depending on the second information, namely with the help of the controller which uses the variable gain factor. For example, the operating setpoint is the control variable determined by the controller. Alternatively, the operating setpoint is the control variable of a further controller which is connected in series with the controller using the variable gain factor.

According to a further embodiment, the operational variable is representative of external load acting on the rotatable component. The external load is, for example, external torque acting on the rotatable component, e.g. induced by the wind acting on the wind turbine. Additionally or alternatively, the external load may result from vibrations induced on the rotatable component, for example resulting from the rotation of the rotor of the wind turbine and/or resulting from changing wind speeds and/or resulting from tower movement. The external load is, in particular, a load which is not induced by the at least one drive but against which the at least one drive has to fight.

For example, the first information or the operational variable is determined depending on measurements. The external torque acting on the rotatable component may be determined by determining the actual torque which the at least one drive exerts. In other words, the operational variable may be the torque exerted by the drive, or, in case of several drives exerting torque on the rotatable component, the operational variable is the sum of all actually exerted torques. For determining a torque exerted by a drive, a current sensor may be used which determines the actual electric current with which the drive is operated. The actual electric current may be determined from the PWM-signals transmitted to the drive by using a motor model. Indeed, the electric current is proportional to the actually exerted torque.

Additionally or alternatively, the operational variable is the rotational speed of the at least one drive. For example, for intentionally rotating the rotatable component, a maximum rotational speed of the at least one drive is applied/defined. If the actual rotational speed of the at least one drive exceeds this maximum rotational speed, this is an indication that external load/torque acts on the rotatable component. The amount by which this maximum rotational speed is exceeded is representative of the amount of external load/torque. By way of example, the maximum rotational speed is 1500 rpm.

For example, for determining the first information, the measurements taken for determining the external load may be averaged over a certain time interval. The time interval is, for example, at least one second or at least 5 seconds or at least 10 seconds and/or at most 60 seconds or at most 30 seconds.

According to a further embodiment, the variable gain factor changes with increasing external load. For example, the variable gain factor changes continuously, such as linearly, with increasing external load or it changes stepwise with increasing external load. Particularly, the gain factor may increase with increasing external load. In order to determine the variable gain factor for a certain external load, an analytic function or a look-up table may be used.

By way of example, when the rotational speed of the at least one drive exceeds the above-mentioned maximum rotational speed, the gain factor is changed, e.g. increased. The gain factor may then be changed/increased with further increasing rotational speed until a cut-off rotational speed is reached. From thereon, the gain factor may again be left constant. The cut-off rotational speed is, for example, 3000 rpm.

High external loads can be particularly dangerous for the drives when the drives are not (yet) prepared to stand these high external loads as this may lead to slippage. Stiff control of the at least one drive in order to be able to react quickly at high external loads can be helpful to avoid slippage.

According to a further embodiment, the rotatable component is a component of a yaw system of the wind turbine. For example, the rotatable component is a nacelle of the wind turbine or a carrier for a nacelle or a yaw bearing.

According to a further embodiment, the rotatable component is a component of a pitch system of the wind turbine. For example, the rotatable component is a rotor blade of the wind turbine or a carrier for a rotor blade or a pitch bearing.

According to a further embodiment, the controller is a speed controller for controlling the rotational speed of the at least one drive. The speed controller determines a control variable depending on the deviation between the actual rotational speed of the at least one drive and the rotational speed setpoint for the at least one drive. The control variable is, for example, a torque setpoint defining the desired torque exerted by the at least one drive. The operating setpoint may be this control variable or may be determined depending on this control variable.

According to a further embodiment, the operational variable is at least one of

-    the external torque acting on the rotatable component,
-    the wind speed at the wind turbine,
-    wind turbulences at the wind turbine,
-    a failure in the wind turbine.

By way of example, when the external torque and/or the wind speed and/or the wind turbulences increase, the variable gain factor is increased. The external torque, the wind speed and/or wind turbulences may be determined depending on measurements taken with measuring devices of the wind turbine.

In the case that operational variable is a failure in the wind turbine, the gain factor may be increased stepwise. For example, when the operating variable is indicative for a failure in the wind turbine, the variable gain factor may be increased stepwise from one value used in a non-failure mode to a value used for a failure mode. The failure could be a blade which is stuck (blade stuck event).

Particularly, when the rotatable component is a component of a yaw system, such as the nacelle, a blade stuck event can induce major load on the yaw system. This is because a stuck blade causes aerodynamic imbalance leading to high tilt and yaw bending moments. The yaw system has to withstand this high yaw bending moment, i.e. the high external torques associated therewith. The reaction of the yaw drives in this case can be made stiffer by increasing the variable gain factor.

According to a further embodiment, the controller comprises a proportional term. For example, the controller is a proportional (P-) controller or a proportional-integral (PI-) controller. The control variable u(t) of a pure proportional controller is

$$u(t) = k_P \cdot e(t),$$

wherein e(t) is the difference between the setpoint and (measured) process variable.

In case of a proportional-integral controller, the control variable u(t) is

$$u(t) = k_P \cdot e(t) + k_I \int_0^\tau e(\tau)d\tau.$$

According to a further embodiment, the variable gain factor is used for the proportional term. In other words, the variable gain factor is kp. Alternatively, however, the variable gain factor could be $k_I$. Alternatively, both kp and $k_I$ could be variable gain factors which are each determined depending on the operational variable.

According to a further embodiment, the method further comprises a step of providing third information. The third information is representative of a position setpoint of the rotatable component.

The position setpoint is the target value of the position of the rotatable component. The position setpoint is, in particular, an angle, e.g. between 0° and 360°. The third information may be provided by a main control device of the wind turbine, i.e. the turbine controller.

According to a further embodiment, the operating setpoint for the at least one drive is determined also depending on the third information such that, when the at least one drive is operated according to the operating setpoint, the at least one drive brings or keeps the rotatable component at the position setpoint by exerting torque. In other words, the operating setpoint is configured to cause an operation of the at least drive such that the at least one drive brings or keeps the rotatable component at the position setpoint by exerting torque.

According to a further embodiment, the method comprises a step of providing fourth information which is representative of the actual position of the rotatable component. The fourth information may be determined depending on measurements. For example, the rotational position of the rotatable component is determined with the help of an incremental encoder.

According to a further embodiment, the operating setpoint is also determined depending on the fourth information. For example, this is done by using a feedback loop, particularly a negative feedback loop, with the third and the fourth information as input information so that the difference between the actual position and the position setpoint is minimized.

The fourth information and, if applicable, the third information may be repeatedly or continuously provided and, accordingly, the operating setpoint is repeatedly or continuously determined and generated depending on the third and the fourth information in order to make the actual position to match the position setpoint.

The feedback loop using the third and fourth information may be realized with the help of a controller, herein also referred to as "position controller". Depending on the deviation between the actual position and the position setpoint, the position controller determines a control variable, wherein the operating setpoint may be determined depending on this control variable. The control variable is, for example, a rotational speed setpoint used as an input for the above-mentioned speed controller.

According to a further embodiment, the position controller uses the variable gain factor.

According to a further embodiment, the method comprises a step of providing fifth information which is representative of a rotational speed setpoint of the at least one drive. The rotational speed setpoint is the target value of the rotational speed of the at least one drive for bringing or keeping the rotatable component at the position setpoint. For example, the fifth information is determined depending on the third information. That is, the rotational speed setpoint may be determined depending on the position setpoint.

The "rotational speed of the at least one drive" herein means, in particular, the rotational speed as input into the gearbox, i.e. as provided by the electric motor.

According to a further embodiment, the method comprises a step of providing sixth information which is representative of the actual rotational speed of the at least one drive. The actual rotational speed of the at least one drive may be determined with the help of measurements. For example, an incremental encoder may be used to measure the rotational speed of the drive.

According to a further embodiment, the operating setpoint is determined also depending on the fifth and the sixth information, i.e. the fifth and the sixth information are used additionally to the second information, and optionally to the third and the fourth information. Particularly, the operating setpoint is determined by using a further feedback loop with the fifth and the sixth information as input information so that the difference between the actual rotational speed and the rotational speed setpoint is minimized. The feedback loop is, in particular, a negative feedback loop. For example, the fifth and sixth information are repeatedly or continuously provided and compared. Depending on this, the operating setpoint is determined repeatedly or continuously in order to make the actual rotational speed to match the rotational speed setpoint.

According to a further embodiment, the speed controller is used for minimizing the difference between the actual rotational speed and the rotational speed setpoint.

According to a further embodiment, the wind turbine comprises two or more drives, e.g. at least four or at least six drives for rotating the rotatable component. Particularly in the case of a yaw system, several drives may be used to rotate the rotatable component. All features disclosed herein with respect to the at least one drive for rotating the rotatable component are also disclosed for all other drives used for rotating the rotatable component.

Particularly, a corresponding operating setpoint may be determined for each drive. Each operating setpoint is then determined depending on the second information and optionally, depending on the third, fourth, fifth and/or sixth information. For example, each drive is assigned an individual speed controller using the variable gain factor.

According to a further embodiment, the method comprises a step of providing seventh information. The seventh information is representative of a torque difference setpoint. The torque difference setpoint is the target value of the difference between the torques of at least two drives. For example, the torque difference setpoint is a positive number.

According to a further embodiment, the method comprises a step of providing eighth information which is representative of the actual torque difference between the actual torques exerted by the drives. By way of example, the actual electric currents with which the electric motors are actually operated are determined as described above and these currents are then stored in the eighth information. Alternatively, it is possible to directly measure the torques provided by the drives or the torque difference and to store these measurements in the eighth information.

According to a further embodiment, operating setpoints are determined for all drives. The operating setpoints for the drives are also determined depending on the seventh and eighth information, namely by using a feedback loop, particularly a negative feedback loop, with the seventh and the eighth information as input information so that the difference between the torque difference setpoint and the actual torque difference is minimized. Particularly, the seventh and the eighth information are repeatedly or continuously provided and compared. Depending on this, the operating setpoints are repeatedly or continuously determined or adjusted, respectively, in order to make the actual torque difference to match the torque difference setpoint.

Determining the operating setpoints depending on the seventh and the eighth information by using the feedback loop may be realized with the help of a controller, herein also called "tension controller". The tension controller is, for example, a proportional (P-) controller. For example, depending on the deviation between the actual torque difference and the torque difference setpoint, the tension controller determines at least one control variable. The operating setpoints may be representative of this control variable and/or may be determined depending on this control variable. By being operated according to the operating setpoints, the operation of the drives can then be adjusted according to the control variable.

According to a further embodiment, the tension controller uses the variable gain factor.

According to further embodiment, the method comprises the step of determining ninth information depending on the seventh and the eighth information. The ninth information is representative of an offset rotational speed and the offset rotational speed depends on the difference between the torque difference setpoint and the actual torque difference. The offset rotational speed is, in particular, a target difference between the rotational speeds of the drives. The greater the difference between the torque difference setpoint and the actual torque difference, the greater the offset rotational speed.

Determining the ninth information may be done by the above-mentioned tension controller. By way of example, the offset rotational speed is the control variable determined with the tension controller.

According to a further embodiment, the fifth information is determined depending on the ninth information such that the rotational speed setpoint of at least one drive is the rotational speed setpoint of another drive minus the offset rotational speed. By way of example, if the actual torque difference is much smaller than the torque difference setpoint, the offset rotational speed is determined to be comparatively large and, accordingly, the rotational speed setpoints of the drives are much different. On the other hand, if the actual torque difference is equal to the torque difference setpoint, then the offset rotational speed may be smaller or may be zero.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments de-

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, plc for short. Additionally, the control system may comprise one or more drive control modules which convert the operating setpoint(s) into actual electric signals, e.g. PWM signals, with which the one or more drives are then controlled. The control system may be part of the wind turbine.

According to an embodiment, the control system comprises means with the help of which the first information is determinable. Particularly the external load acting on the rotatable component can be determined with the help of these means. The means may be the current sensors of the one or more drive control modules. As mentioned above, the actual torques can be derived from the electric currents. Additionally or alternatively, the means may be or may comprise a wind speed sensor or a pitch angle sensor such as an encoder. The pitch angle sensor may be used, for example, to detect a blade stuck event.

According to a further embodiment, the control system further comprises means, particularly a sensor, with the help of which the actual rotational speed of the at least one drive is determinable. For example, the control system comprises one ore incremental encoders, particularly one incremental encoder for each drive.

According to a further embodiment, the control system further comprises means, particularly a sensor, with the help of which the actual position of the rotatable component is determinable. For example, the control system comprises an incremental encoder assigned to the rotatable component.

Next, the wind turbine is specified.

According to an embodiment, the wind turbine comprises at least one rotatable component as well as at least one drive which is configured to rotate the rotatable component by exerting torque. The wind turbine further comprises the control system as specified herein. The control system is signally connectable or signally connected to the at least one drive in order to enable an operation of the at least one drive according to the operating setpoint.

Thus, the wind turbine is, in particular, configured to execute the method according to any of the embodiments described herein. All features disclosed for the method are also disclosed for the wind turbine and vice versa. When the method is executed, the at least one drive is operated according to the operating setpoint.

The rotatable component of the wind turbine may be a component of the yaw system and/or the pitch system, like the nacelle or a nacelle carrier or a rotor blade or a rotor blade carrier.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

Figure 1 shows an exemplary embodiment of the wind turbine,

Figure 2 shows an exemplary embodiment of a yaw system in a perspective view,

Figure 3 shows an exemplary embodiment of a yaw system in a cross-sectional view,

Figure 4 shows an exemplary embodiment of a yaw system in a top view,

Figure 5 shows a flowchart of an exemplary embodiment of the method for operating a wind turbine,

Figure 6 shows a flowchart of another exemplary embodiment of the method for operating a wind turbine,

Figure 7 shows an exemplary embodiment of a controller,

Figure 8 shows an exemplary embodiment of the control system,

Figure 9 shows an exemplary embodiment of an operation of a drive control module.

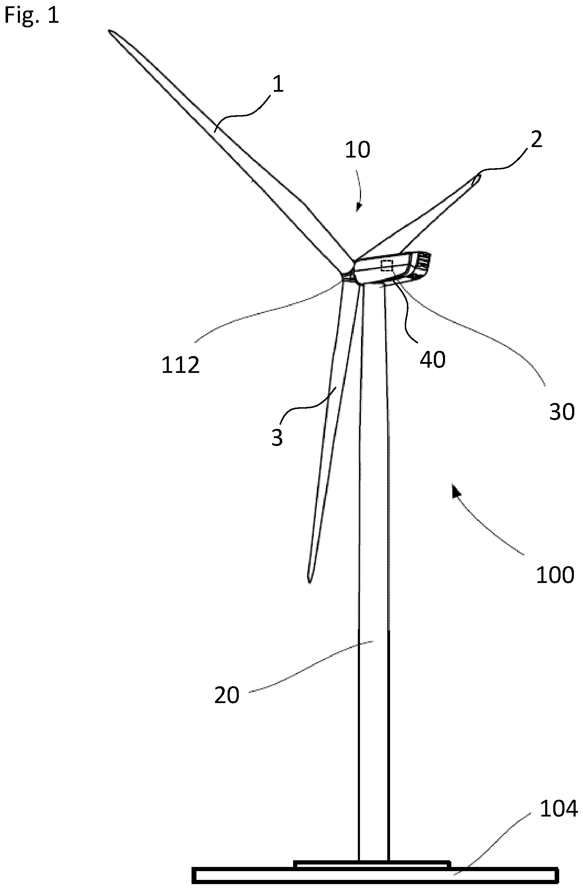

Figure 1 shows a wind turbine 100 which comprises a tower 20. The tower 20 is fixed to the ground by means of a foundation 104. A nacelle 40 is rotatably mounted at one end of the tower 20, opposite to the ground. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to a respective target position. In order to control and operate the drives, the wind turbine comprises a control system 30 which determines operating setpoints with which the drives are operated. The control system 30 is located in the nacelle 40.

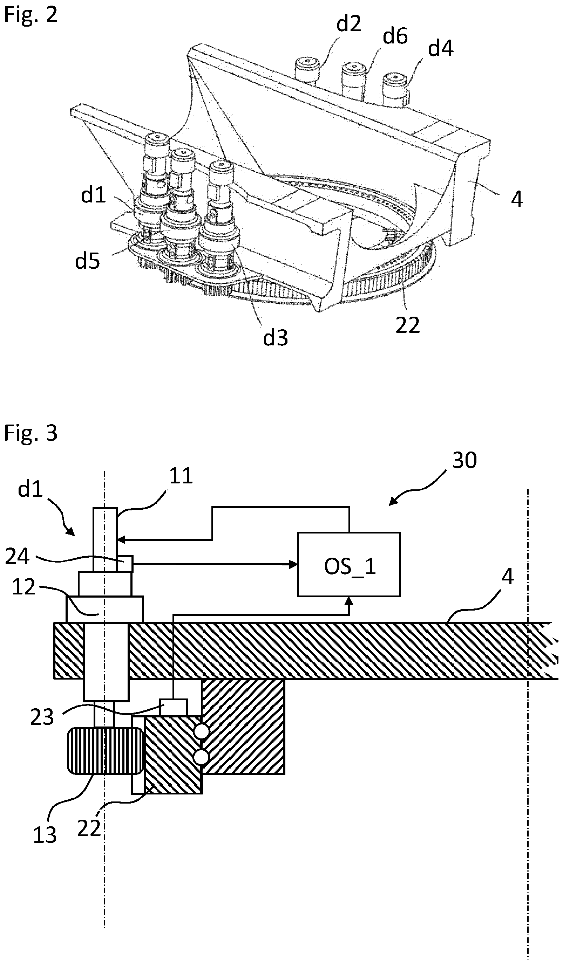

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Figure 3 shows only one of the drives, namely drive d1. All other drives may be formed identically.

Drive d1 comprises an electric motor 11. The electric motor 11 is operated depending on an operating setpoint OS_1 generated by the control system 30. Depending on the operating setpoint OS_1, drive d1 is rotated and thereby exerts a certain torque. The rotational speed and torque of the electric motor 11 is transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are processed by the control system 30. Moreover, another incremental encoder 24 is provided, with the help of which the actual rotational speed of the electric motor 11 of the drive d1 is determinable. These measurements are also processed by the control system 30. For each drive d1 to d6, an individual incremental encoder 24 may be provided.

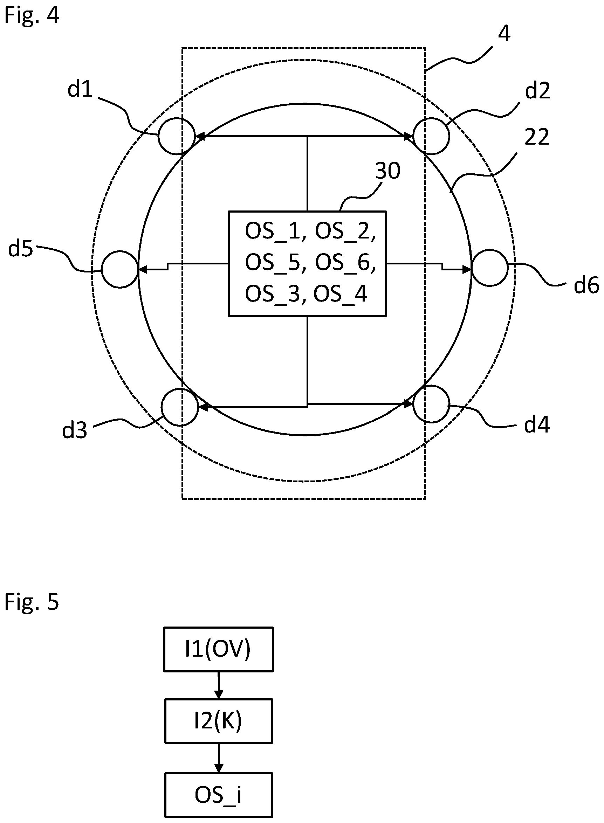

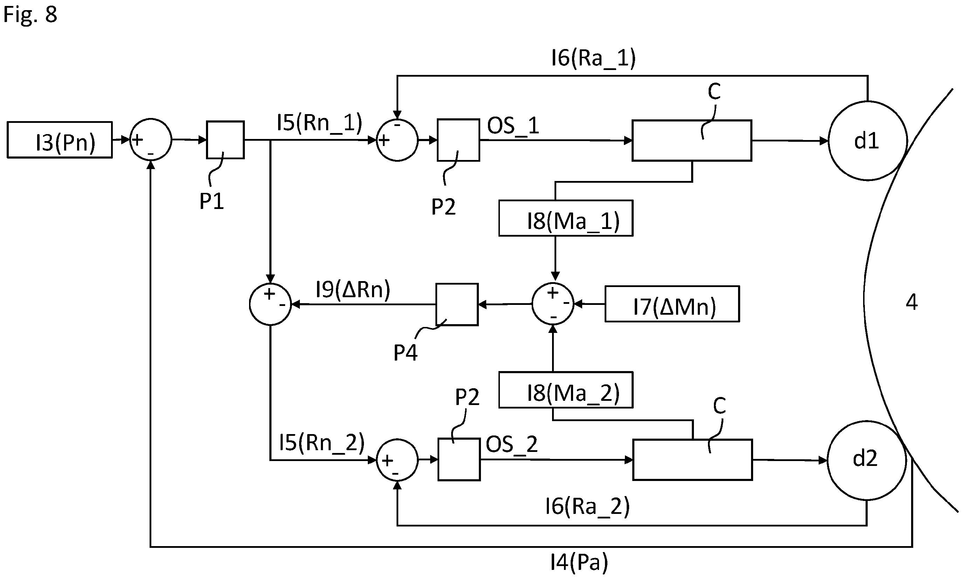

Figure 4 shows an exemplary embodiment of a yaw system, e.g. of the yaw system of figures 2 and 3, in top view. As can be seen here, all six drives d1 to d6 are operated according to corresponding operating setpoints OS_1 to OS_6, OS_i for short, determined with the control system 30. The operating setpoints OS_i may be configured such that different drives d1 to d6, di for short, exert different torques. How this can be achieved is explained in more detail in connection with figure 8.

A possible way to operate the yaw system of figures 2 to 4 is to group the drives into two groups. The left group or first group, respectively, comprises drives d1, d3 and d5. The right group or second group, respectively, comprises drives d2, d4 and d6. Drive d1 may be the master drive. The torques exerted by all other drives may be selected depending on the torque exerted by drive d1. For example, drives d3 and d5 are operated such that they always exert the same torque as drive d1. The drives of the right group, i.e. drives d2, d4 and d6, may be operated such that they always exert the same torques, but torques with absolute values or numeric values which are lower or at most the same as the absolute value or the numeric value of the torque of drive d1. The torques of the left side and of the right side may differ from each other by a torque difference setpoint, e.g. of 10 Nm.

Depending on the current situation, e.g. at high external torques, it could be advantageous to have a very fast reaction of the drives di on changing conditions. Particularly, it can be helpful when the adjustment of the torques exerted by the drives di is stiff. How this can be achieved is explained in the following.

In the exemplary embodiment of the method according to figure 5, first information I1 which is representative of an operational variable OV of the wind turbine is provided. The operational variable OV may be representative of external load acting on the rotatable component. For example, the operational variable OV is at least one of: the external torque acting on the rotatable component, the wind speed at the wind turbine, wind turbulences at the wind turbine, a failure in the wind turbine, for example a stuck rotor blade.

In a further step, second information I2 is determined depending on the first information I1. The second information I2 is representative of a variable gain factor K, the value of which depends on the operational variable OV. For example, the variable gain factor K increases with increasing external load.

Then, operating setpoints OS_i for the drive di are determined depending on the second information I2. The operating setpoints OS_i are determined with the help of one or more controllers. At least one of the controllers uses the variable gain factor K. For example, each drive is uniquely assigned one controller, e.g. a speed controller, and each speed controller uses the variable gain factor K.

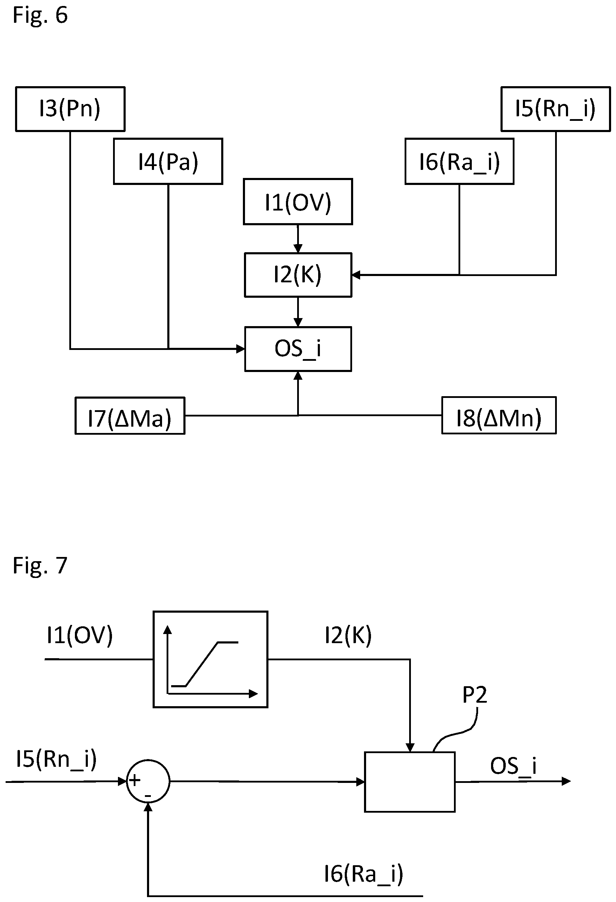

In the exemplary embodiment of the method according to figure 6, the same steps as in figure 5 are executed. Additionally, third I3 and fourth I4 information are provided. The third information I3 is representative of a position setpoint Pn of the rotatable component 4. The fourth information I4 is representative of the actual position Pa of the rotatable component 4. The operating setpoints OS_i for the drives di are also determined depending on the third I3 and fourth information 14, namely by using a feedback loop with the third I3 and the fourth I4 information as input information so that the difference between the actual position Pa and the position setpoint Pn is minimized (see also figure 8).

Moreover, in figure 6, fifth I5 and sixth I6 information are provided. The fifth information I5 is representative of rotational speed setpoints Rn_i of the drives di for bringing or keeping the rotatable component 4 at the position setpoint Pn. The sixth information I6 is representative of the actual rotational speeds Ra_i of the drives di. The operating setpoints OS_i are determined also depending on the fifth I5 and the sixth I6 information, namely by using a further feedback loop with the fifth I5 and the sixth I6 information as input information so that the difference between the actual rotational speed Ra_i and the rotational speed setpoint Rn_i is minimized (see also figure 8).

Last but not least, the method of figure 6 comprises providing seventh I7 and eighth I8 information. The seventh information I7 is representative of a torque difference setpoint ΔMn between the torques exerted by the drives di. For example, the torque difference setpoint ΔMn is the desired difference between the torques exerted by the drives d1, d3, d5 of the left group to the torques exerted by the drives d2, d4, d6 of the right group. The eighth information I8 is representative of the actual torque difference ΔMa between the actual torques Ma_i exerted by the drives di, e.g. the difference between the torques of the two different groups. The operating setpoints OS_i for the drives di are also determined depending on the seventh I7 and eighth I8 information, namely by using a feedback loop with the seventh I7 and the eighth I8 information as input information so that the difference between the torque difference setpoint ΔMn and the actual torque difference Δma is minimized (see also figure 8).

Figure 7 shows an exemplary embodiment of a controller, e.g. a speed controller P2 (see also figure 8). The controller P2 receives an error value which is the difference between a process variable and a setpoint. The process variable is, in this case, the actual rotational speed Ra_i of the drive di to which the controller P2 is assigned. The setpoint is the rotational speed setpoint Rn_i for the drive di. The controller P2 determines a control variable depending on the error value. In this example, the control variable is the operating setpoint OS_i for the drive d_i. The operating setpoint OS_i is, for example, the torque setpoint for the drive d_i.

The controller P2 is, for example, a PI controller. The proportional term of the controller P2 uses a gain factor K with which the error value is multiplied in order to determine the operating setpoint OS_i. The gain factor K is variable and is determined depending on the operational variable. In figure 7, the operation variable OV is, for example, the external load and the variable gain factor K increase at least sectionally linearly with the external load as indicated in the graph of figure 7.

Figure 8 shows an exemplary embodiment of the control system 30 with which the described method can be executed. For better illustration, only the drives d1 and d2 are shown.

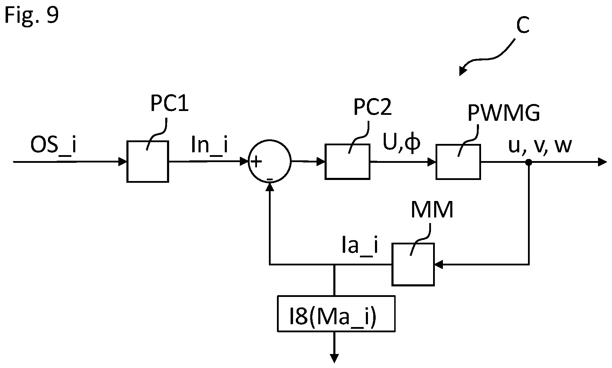

Third information I3, which is representative of a position setpoint Pn of the carrier 4, is provided. Depending on this third information I3 and fourth information I4, a position controller P1 determines fifth information I5. The fifth information I5 is representative of rotational speed setpoints Rn_1 to Rn_6, Rn_i for short, of the drives di. Depending on this fifth information I5, speed controllers P2 determine and generate the operating setpoints OS_i, which are, e.g. torque setpoints. Drive control modules C convert the torque setpoints OS_i into actual electric signals with which the drives di are operated so that the drives di bring or keep the carrier 4 at the position setpoint Pn. The drive control modules C are explained in more detail in connection with figure 9.

The fourth information I4 is representative of the actual position Pa of the carrier 4 and can be determined, for example, with the help of the incremental encoder 23 as described in connection with figure 3. The fourth information I4 and the third information I3 are used in a negative feedback loop. From the deviation between the actual position Pa and the position setpoint Pn, the position controller P1 determines the fifth information I5.

Moreover, in order to achieve that the drives di rotate with the rotational speed setpoints Rn_i, sixth information I6 is provided which is representative of the actual rotational speeds Ra_i of the drives di. The sixth information I6 can be determined with the help of the incremental encoders 24, as explained in connection with figure 3. The sixth information I6 is used together with the fifth information I5 in negative feedback loops in order to minimize the respective differences between the rotational speed setpoints Rn_i and the actual rotational speeds Ra_i. The speed controllers P2 determine the operating setpoints OS_i depending on the deviation between the actual rotational speeds Ra_i and the rotational speed setpoints Rn_i. A possible setup of the speed controllers P2 was explained before in connection with figure 7.

As mentioned before, the drives d1 and d2 may be operated such that they exert different torques. For this purpose, seventh information I7 is provided which is representative of a torque difference setpoint ΔMn. The torque difference setpoint ΔMn is compared to the actual torque difference ΔMa between the actual torques Ma_i of the drives di. The actual torque difference ΔMa can be derived from eighth information I8 which is representative of the actual torques Ma_i of the drives di. The actual torques Ma_i of the drives di can be extracted from the drive control modules C used for operating the drives by using the electric signals with which the motors are actually operated.

Depending on the seventh I7 and the eighth I8 information, ninth information I9 is determined using a negative feedback loop. The ninth information I9 is representative of an offset rotational speed $\Delta Rn$ and is determined with the help of a tension controller P4 depending on the deviation between the actual torque difference $\Delta Ma$ and the torque difference setpoint $\Delta Mn$. For example, the offset rotational speed $\Delta Rn$ is determined such that it increases with increasing difference between the torque difference setpoint $\Delta Mn$ and the actual torque difference $\Delta Ma$.

As can be seen in figure 8, the offset rotational speed $\Delta Rn$ is subtracted from the rotational speed setpoint $Rn\_1$ determined for drive d1 and the resulting value of the rotational speed is used as the rotational speed setpoint $Rn\_2$ for the drive d2. In this way, a torque difference can be realized between drive d1 and drive d2.

Figure 9 illustrates the operation of a drive control module C. A current converter PC1 determines a current setpoint $In\_i$ depending on the operating setpoint $OS\_i$ which, in this example, is the torque setpoint. A further controller PC2 (e.g. a PI-controller) determines an absolute voltage value U and a phase shift $\phi$ depending on the current setpoint $In\_i$ and the actual current $Ia\_i$. PWM-generators PWMG generate corresponding PWM signals with which IGBTs (not shown) are energized. The output thereof is three different phases u, v, w with which the drives di are then operated. Moreover, a motor model MM determines the actual current $Ia\_i$, depending on the phases u, v, w. The actual current $Ia\_i$ and the current setpoint $In\_i$ are used in a negative feedback loop to adapt the voltage value U and the phase shift $\phi$. Furthermore, the eighth information I8 is determined depending on the determined actual current $Ia\_i$.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

Reference sign list:

| | |
|---|---|
| 1 | first rotor blade |
| 2 | second rotor blade |
| 3 | third rotor blade |
| 4 | nacelle carrier |
| 10 | rotor |
| 11 | electric motor |
| 12 | gearbox |
| 13 | pinion |
| 20 | tower |
| 22 | yaw bearing |

| | |
|---|---|
| 23 | incremental encoder |
| 24 | incremental encoder |
| 30 | control system |
| 40 | nacelle |
| 100 | wind turbine |
| 104 | foundation |
| 112 | rotor hub |
| | |
| I1 | first information |
| I2 | second information |
| I3 | third information |
| I4 | fourth information |
| I5 | fifth information |
| I6 | sixth information |
| I7 | seventh information |
| I8 | eighth information |
| I9 | ninth information |
| | |
| OV | operational variable |
| K | gain factor |
| OS_i | operating setpoint |
| di | drive |
| Pn | position setpoint |
| Pa | actual position |
| $\Delta Mn$ | torque difference setpoint |
| $\Delta Ma$ | actual torque difference |
| Rn_i | rotational speed setpoint |
| Ra_i | actual rotational speed |
| Ma_i | actual torque |
| $\Delta Rn$ | rotational speed offset |
| | |
| P1 | position controller |
| P2 | speed controller |
| P4 | tension controller |
| C | motor control module |
| PC1 | current converter |
| PC2 | further controller |
| U | absolute voltage |
| $\Phi$ | phase shift |
| In_i | current setpoint |
| Ia_i | actual current |
| PWMG | PWM generator |
| u, v, w | phases |
| MM | motor model |

**Claims**

1. Method for operating a wind turbine (100) comprising a rotatable component (1 to 4) and at least one drive (di) for rotating the rotatable component (1 to 4) by exerting torque, wherein the method comprises the steps of

- providing first information (I1) which is representative of an operational variable (OV) of the wind turbine (100);
- determining second information (I2) depending on the first information (I1), wherein the second information (I2) is representative of a variable gain factor (K), the value of which depends on the operational variable (OV);
- determining an operating setpoint (OS_i) for the at least one drive (di) depending on the second information (I2), wherein

    - the operating setpoint (OS_i) is determined with the help of a controller (P1 to P4) which uses the variable gain factor (K).

2. Method according to claim 1, wherein

    - the operational variable (OV) is representative of external load acting on the rotatable component (1 to 4),
    - the variable gain factor (K) changes with increasing external load.

3. The method according to claim 1 or 2, wherein

    - the rotatable component (1 to 4) is a component (4) of a yaw system of the wind turbine (100).

4. The method according to any one of the preceding claims, wherein

    - the controller (P1 to P4) is a speed controller (P2) for controlling the rotational speed of the at least one drive (di) .

5. The method according to any one of the preceding claims, wherein

    - the operational variable (OV) is at least one of

      - the external torque acting on the rotatable component (1 to 4),
      - the wind speed at the wind turbine (100),
      - wind turbulences at the wind turbine (100),
      - a failure in the wind turbine (100).

6. The method according to any one of the preceding claims, wherein

    - the controller (P1 to P4) comprises a proportional term,
    - the variable gain factor (K) is used for the proportional term.

7. The method according to any one of the preceding claims, further comprising

    - providing third information (I3) which is representative of a position setpoint (Pn) of the rotatable component (1 to 4); wherein
    - the operating setpoint (OS_i) is also determined depending on the third information (I3) so that

      - when the at least one drive (di) is operated according to the operating setpoint (OS_i), the at least one drive (di) brings or keeps the rotatable component (1 to 4) at the position setpoint (Pn) by exerting torque.

8. The method according to claim 7, further comprising

    - providing fourth information (I4) which is representative of the actual position (Pa) of the rotatable component (1 to 4); wherein
    - the operating setpoint (OS_i) is also determined depending on the fourth information (I4), namely by using a feedback loop with the third (I3) and the fourth (I4) information as input information so that the difference between the actual position (Pa) and the position setpoint (Pn) is minimized.

9. Method according to claim 7 or 8 in its dependency on claim 4, further comprising

    - providing fifth information (I5) which is representative of a rotational speed setpoint (Rn_i) of the at least one drive (di) for bringing or keeping the rotatable component (1 to 4) at the position setpoint (Pn);
    - providing sixth information (I6) which is representative of the actual rotational speed (Ra_i) of the at least one drive (di); wherein
    - the operating setpoint (OS_i) is determined also depending on the fifth (I5) and the sixth (I6) information, namely by using a further feedback loop with the fifth (I5) and the sixth (I6) information as input information so that the difference between the actual rotational speed (Ra_i) and the rotational speed setpoint (Rn_i) is minimized,
    - the speed controller (P2) is used for minimizing the difference between the actual rotational speed (Ra_i) and the rotational speed setpoint (Rn_i).

10. Method according to any one of the preceding claims, wherein the wind turbine (100) comprises two or more drives (di) for rotating the rotatable component (1 to 4) by exerting torques, wherein the method further comprises

    - providing seventh information (I7) which is representative of a torque difference setpoint (ΔMn) between the torques exerted by the drives (di);
    - providing eighth information (I8) which is representative of the actual torque difference

($\Delta$Ma) between the actual torques (Ma_i) exerted by the drives (di); wherein
- the operating setpoints (OS_i) for the drives (di) are also determined depending on the seventh (I7) and eighth (I8) information, namely by using a feedback loop with the seventh (I7) and the eighth (I8) information as input information so that the difference between the torque difference setpoint ($\Delta$Mn) and the actual torque difference ($\Delta$Ma) is minimized.

11. Computer program comprising instructions which, when the program is executed by a control system, cause the control system to carry out the method of any one of claims 1 to 10.

12. Computer-readable data carrier having the computer program of claim 11 stored thereon.

13. Control system (30) comprising means for executing the method according to any one of claims 1 to 10.

14. Control system (30) according to claim 13, wherein

- the control system (30) comprises means with the help of which an operational variable (OV) of the wind turbine (100) is determinable.

15. Wind turbine (100) comprising

- a rotatable component (1 to 4),
- at least one drive (di) for rotating the rotatable component (1 to 4) by exerting torque,
- the control system (30) according to any one of claims 13 or 14, wherein
- the control system (30) is signally connected to the at least one drive (di) in order to enable an operation of the at least one drive (di) according to the operating setpoint (OS_i).

Fig. 1

Fig. 2

Fig. 3

Fig. 4

d1     4     d2

22

30

OS_1, OS_2,
OS_5, OS_6,
OS_3, OS_4

d5     d6

d3     d4

Fig. 5

I1(OV)

I2(K)

OS_i

Fig. 6

```
┌─────────┐                                              ┌─────────┐
│ I3(Pn)  │                                              │ I5(Rn_i)│
└────┬────┘                                              └────┬────┘
     │       ┌─────────┐                      ┌─────────┐     │
     │       │ I4(Pa)  │                      │ I6(Ra_i)│     │
     │       └────┬────┘    ┌─────────┐       └────┬────┘     │
     │            │         │ I1(OV)  │            │          │
     │            │         └────┬────┘            │          │
     │            │              │                 │          │
     │            │         ┌────▼────┐            │          │
     │            │         │  I2(K)  │◄───────────┴──────────┘
     │            │         └────┬────┘
     │            │              │
     │            └──────►┌──────▼──────┐
     └───────────────────►│    OS_i     │
                          └──────▲──────┘
                                 │
┌─────────┐                      │                  ┌─────────┐
│ I7(ΔMa) ├──────────────────────┴──────────────────┤ I8(ΔMn) │
└─────────┘                                          └─────────┘
```

Fig. 7

Fig. 8

Fig. 9

Europäisches
Patentamt

European
Patent Office

Office européen
des brevets

# EUROPEAN SEARCH REPORT

**Application Number**

EP 24 38 2823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/113022 A1 (GRUNNET JACOB DELEURAN [DK] ET AL) 18 April 2019 (2019-04-18) * paragraphs [0028] - [0049], [0066] - [0088] * | 1,2,4-15 | INV. F03D7/02 F03D7/04 |
| X | CN 114 294 156 A (HUA ENERGY NEW ENERGY CO LTD ET AL.) 8 April 2022 (2022-04-08) | 1,3,5,6, 11-15 | |
| Y | * the whole document * | 4,7,9,10 | |
| X | WANG YULONG ET AL: "Analysis on Control Method VSCF Wind Power System", MULTIMEDIA AND INFORMATION TECHNOLOGY, 2008. MMIT '08. INTERNATIONAL CONFERENCE ON, IEEE, PISCATAWAY, NJ, USA, 30 December 2008 (2008-12-30), pages 677-680, XP031477091, ISBN: 978-0-7695-3556-2 * Section 3.3, page 679; figure 2 * | 1,6-8, 11-15 | |
| Y | US 2023/184214 A1 (RIEKE JOHANNES [DE] ET AL) 15 June 2023 (2023-06-15) * paragraphs [0012], [0022]; figure 3 * | 4,7,9,10 | TECHNICAL FIELDS SEARCHED (IPC) F03D |

The present search report has been drawn up for all claims

| Place of search | Date of completion of the search | Examiner |
|---|---|---|
| The Hague | 18 December 2024 | Libeaut, Laurent |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 38 2823

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2024

| Patent document cited in search report | Publication date | Patent family member(s) | Publication date |
|---|---|---|---|
| US 2019113022 A1 | 18-04-2019 | CN 109072875 A | 21-12-2018 |
| | | EP 3436693 A1 | 06-02-2019 |
| | | ES 2870074 T3 | 26-10-2021 |
| | | US 2019113022 A1 | 18-04-2019 |
| | | WO 2017167343 A1 | 05-10-2017 |
| CN 114294156 A | 08-04-2022 | NONE | |
| US 2023184214 A1 | 15-06-2023 | EP 4198298 A1 | 21-06-2023 |
| | | US 2023184214 A1 | 15-06-2023 |

EPO FORM P0459

For more details about this annex : see Official Journal of the European Patent Office, No. 12/82